# EUROPEAN PATENT SPECIFICATION

(11) **EP 3 571 914 B1**
(45) Date of publication and mention of the grant of the patent: **21.08.2024**
(21) Application number: 19176104.8
(22) Date of filing: 23.05.2019
(51) Int. Cl.: A01C 21/00, A01C 17/00, A01C 15/00

(54) **FERTILIZER SPREADER**
DÜNGERSTREUER
ÉPANDEUR D'ENGRAIS

(30) Priority: 23.05.2018 IT 201800005644
(43) Date of publication of application: 27.11.2019
(60) Divisional application: 20214894.6
(73) Proprietor: Dal Cero Metalworking S.n.c. di Dal Cero Sergio & Diego, 37030 Ronca' (VR) (IT)
(72) Inventor: Dal Cero, Diego, 37030 Roncà (VR) (IT); Dal Cero, Sergio, 37030 Roncà (VR) (IT)
(74) Representative: Gallo, Luca

(56) References cited:
- EP-A1- 0 968 639
- EP-A1- 2 409 560
- DE-A1- 19 921 996
- DE-A1- 3 643 855
- DE-A1- 4 106 560
- DE-A1- 4 407 009
- FR-A1- 3 006 854
- US-A- 3 109 657
- US-A- 6 089 478

## Description

The present invention refers, in general, to a fertilizer spreader.

More particularly, the present invention refers to a centrifugal fertilizer spreader of reduced dimensions, suitable to be used preferably in vineyards, orchards and other similar crops.

As it is known, also in the vineyards and orchards fertilizer substances are used which usually are in the form of small size granules or pellets and are distributed by means of suitable fertilizer spreaders secured to tractors.

However, in said crops the space available for the passage of these vehicles is rather small and therefore, it is not possible to use the fertilizer spreaders that are normally used for the so-called "open field" crops.

Thus, fertilizer spreaders of reduced dimensions are used but commonly, these fertilizer spreaders do not have advanced technologies for a correct control of the product to be distributed.

It is not possible, therefore, to check the quantity of product distributed per square meter. In addition, it is difficult to make a correct distribution in those areas where it is necessary to spread more or less fertilizer according to the needs of the plants.

For example, it is not possible to distribute more or less product on one side than the other on the basis of a prescription map.

Besides, another problem of said fertilizer spreaders is the difficult regulation of the quantity of product to be distributed, especially in the case in which this quantity should be minimal.

A further problem of the fertilizer spreaders according to the prior art is related to their movement, in particular at the end of the vineyard row, when the tractor has to turn to one side. On such occasions, there is a risk that the fertilizer spreader that is cantilevering with respect to the tractor will hit the row opposite to the turning direction.

Document EP 2409560 A1 discloses a known fertilizer spreader which comprises a support frame bearing a tank that contains the product to be distributed. The tank is provided with a lower outlet hole where a metering device is placed, which is driven by an on-board computer. Moreover, the fertilizer spreader comprises a rotary spreader plate which is mounted on the support frame below the metering device and is activated by a drive device controlled by the computer. Further, the fertilizer spreader comprises a mass flow detecting device for measuring the mass flow of product which is delivered by the spreader plate. In particular, the mass flow detecting device comprises a sensor that detects the values of the torque of the drive device at the current application rate, and these values are processed to calculate the mass flow of delivered product. The data about the mass flow of product are used by the computer to drive the metering device in order to adjust the quantity of product delivered from the tank. Moreover, the fertilizer spreader comprises a load cell connected to the support frame and arranged to record values of the weight of the product in the tank and transmit them to the computer. The measured values of the load cell are linked to the measured values of the mass flow in order to perform an interval-wise calibration of the values of mass flow determination of the flow device.

FR 3 006 854 A1 also discloses a state of the art fertilizer spreader with load cells to measure weight changes in the tank of the spreader. From DE 41 06 560 A1 another state of the art fertilizer spreader is known. This document describes individual adjustment of the distribution openings of the tank in order to set different application rates.

An object of the invention is to remedy the above-mentioned inconveniences and others through a fertilizer spreader of reduced dimensions so as to be used also in vineyards and orchards or similar crops with reduced passage and maneuvering spaces.

A further object of the invention is to provide a fertilizer spreader that can be used also in open field crops without having to make particular and laborious adjustments.

Another object of the invention is to offer a fertilizer spreader that allows an optimal control of the quantity of product to be distributed.

A further object of the invention is to provide a fertilizer spreader that adjusts the quantity of product spread per square meter according to the actual need of the plant and/or crop being treated, through the connection between weighing cells, electric actuators and prescription maps.

These and other objects are achieved according to the invention through a centrifugal fertilizer spreader that is suitable to be used preferably in vineyards and/or orchards to distribute a product in the form of granules or pellets on a ground, and adapted to be secured to a tractor.

The fertilizer spreader according to the invention comprises:
- a tank adapted to contain the product to be distributed, and divided into a right containment portion and a left containment portion, in which a right hole and a left hole are formed, respectively and have a respective adjustable opening for product output through respective closing means;
- distribution means to distribute the product leaving the tank on the ground, comprising a right rotary spreader plate and a left rotary spreader plate, placed below the right hole and the left hole, respectively and comprising a spreader scoop of substantially vertical development;
- a frame to which the tank and the distribution means are fixed and which is adapted to be fixed to the tractor;
- at least one load cell fixed to the frame and adapted to weigh the product inside the tank.

In particular, the fertilizer spreader according to the invention is characterized by the fact of comprising a control unit connected to a GPS device, the at least one load cell, the closing means of the right hole and the closing means of the left hole, so that the opening of the right hole and the opening of the left hole are adjustable independently of each other and depending on the position of the fertilizer spreader and the weighing carried out continuously by the at least one load cell.

Through this configuration, the control unit continuously interfaces with the data coming out of the one or more load cells that weigh the quantity of product inside the tank, and allows to distribute the correct quantities of product by varying the openings of the two holes, on the basis of the values indicated by the prescription map used.

Besides, a connection structure may be comprised and is adapted to be fixed to the tractor and connected to the frame; in particular, the one or more load cells may be fixed between the connection structure and the frame so as to obtain a more precise measurement of the product inside the tank, regardless of the position of said product inside the tank.

Advantageously, the fertilizer spreader according to the invention may comprise a fixed wall which is arranged between the distribution means and the connection structure and is adapted to prevent the product from being distributed towards the front part of the fertilizer spreader, that is towards the tractor.

In addition, a removable conveyor may be comprised and is adapted to be coupled in a removable way to the fixed wall through a right band and a left band, and comprising a rear small wall adapted to prevent the product from being distributed towards the rear part of the fertilizer spreader, and at its side ends, a right discharge mouth and a left discharge mouth are formed.

Through the easy removal of the conveyor it is possible to quickly adapt the fertilizer spreader according to the needs, by converting the fertilizer spreader from a localized spreading fertilizer spreader to a full-field spreading fertilizer spreader, and vice versa.

Besides, the fertilizer spreader according to the invention is also characterized by the fact that the opening of the right hole and the opening of the left hole are adjustable independently of each other, so as to vary the quantity of output product according to the local and precise needs of the ground.

Advantageously, the conveyor may comprise a right chute and a left chute in correspondence with the right discharge mouth and left discharge mouth, respectively, so as to facilitate the exit of the product from the two discharge mouths.

Besides, a right bulkhead and a left bulkhead may be comprised and are arranged above the right discharge mouth and the left discharge mouth, respectively, said right bulkhead and said left bulkhead being rotating around a horizontal axis, so as to adjust the distance of diffusion of the product from the right discharge mouth and from the left discharge mouth.

The right hole and the left hole may be formed in a right inner plate of the right containment portion and in a left inner plate of the left containment portion, respectively, the right inner plate and the left inner plate being adjacent to each other and arranged substantially vertically.

Through this configuration, the product can easily and smoothly exit from the two holes even when the two holes are almost closed.

In addition, a right rotary stirrer and a left rotary stirrer may be arranged on the bottom of the right containment portion and on the bottom of the left containment portion, respectively; the right stirrer and the left stirrer may comprise a respective lamella which, in the rotational motion of each stirrer, passes adjacent to the respective hole, so that the exit of the product from the hole is facilitated.

Advantageously, the right stirrer and the left stirrer may comprise a right lower pin and a left lower pin, respectively; in particular, the right lower pin may be fixed in a removable way to a central pin of the right spreader plate, and likewise, the left lower pin may be fixed in a removable way to a central pin of the left rotary spreader plate.

In this way, it is possible to release the pin of the stirrer from the pin of the spreader plate, so that the stirrer is prevented from rotating and it is possible to avoid both the formation of unwanted powders and a further mincing of the product when the product outlet hole is completely closed.

Advantageously, at least one between the right hole and the left hole may have a lower portion in the form of an irregular parallelepiped with a lower horizontal side and oblique side ends. Said right hole and/or left hole may be closable by a dosing shutter comprising an extreme portion the side edges of which are right or inclined inwards, so that in the overlap of the dosing shutter with the respective right hole or left hole, in the closing phase of the hole, the hole portion that can remain open, has a triangular shape.

This shape allows the product to fall even when the open hole portion is minimal.

Furthermore, the tank may have an upper quadrangular perimeter showing a right rear beveled corner and a left rear beveled corner in order to facilitate the movement maneuvers of the fertilizer spreader when the tractor must turn.

Advantageously, the spreader scoop of the right rotary spreader plate or left rotary spreader plate may have an adjustable orientation, said spreader scoop being rotating around a vertical axis.

In this way, it is possible to adjust the distribution distance of the product.

Further features and details of the invention will be better understood from the following specification that is provided by way of a non-restricting embodiment as well as from the annexed drawings, wherein:
Figure 1 is an axonometric view of a fertilizer spreader according to the invention;
Figures 2, 3 and 4 are a side view, a top view and a rear view of the fertilizer spreader in Figure 1, respectively;
Figure 5 is a rear view of the fertilizer spreader in Figure 1, without an element, specifically a conveyor;
Figure 6 is a view of a detail of the fertilizer spreader, this detail being indicated with C in Figure 5;
Figure 7 is a front view of a portion of the fertilizer spreader in Figure 1, in which the outlet hole is formed to allow the product to come out of the tank;
Figure 8 is a view of the portion in Figure 7 also including the closing means of the outlet hole;
Figures 9, 10 and 11 are an axonometric view, a side view and a top view of a spreader disc, respectively;
Figure 12 is a top view of the spreader disc in Figure 9, without the spreader scoops;
Figure 13 is an axonometric view of a stirrer present inside the tank of the fertilizer spreader in Figure 1.

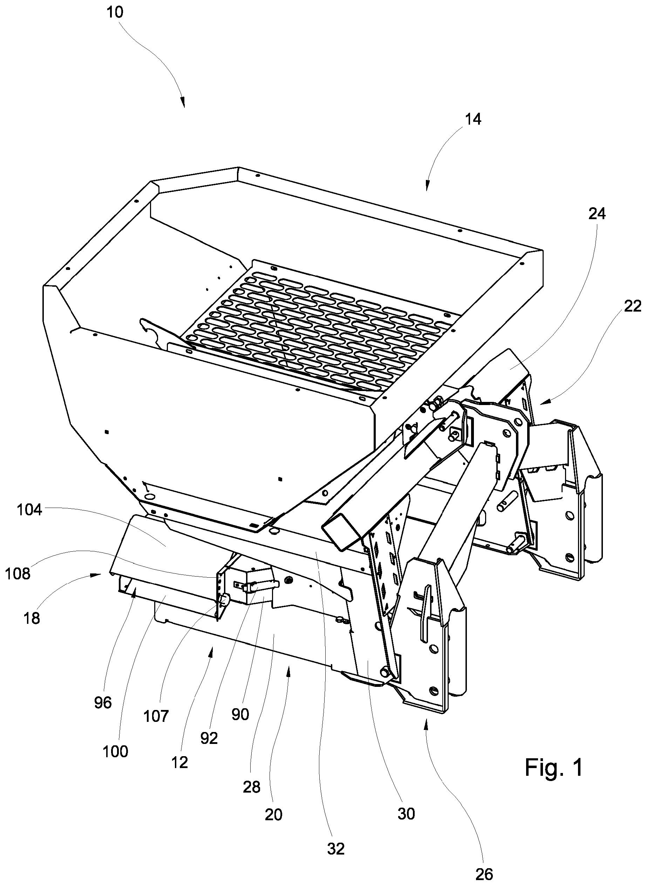

With reference to the annexed drawings, in particular Figures 1 to 5, reference number 10 denotes a fertilizer spreader which can be removably attached to a tractor in order to distribute a product onto the ground, and comprising:
- a frame 12 to which the various components of the fertilizer spreader are connected and which allows the connection of the fertilizer spreader to the tractor by means of a connection structure 26;
- a tank 14 which is connected to the frame 12 and is suitable for containing a solid fertilizer;
- distribution means 16 connected to the frame 12 and suitable for spreading laterally the product coming out of the tank 14;
- a conveyor 18 which conveys the product onto the ground in a predetermined direction.

The frame 12 includes a right side structure 20 and a left side structure 22 which are connected to each other through a crosspiece 24 and a connection structure 26 for the connection to the tractor, configured according to the prior art.

Now, the right side structure 20 is described, the right side structure 20 being symmetric to the left side structure 22.

The right side structure 20 includes a lower right bar 28 an end of which is fixed to a right upright 30 to which an upper right bar 32 is also fixed.

The tank 14 rests therefore on the upper right bar 32 and the upper left bar and rests centrally on the crosspiece 24 by means of a support element 25.

Load cells are arranged between the frame 12 and the connection structure 26 and are used to detect the weight of the product inside the tank 14.

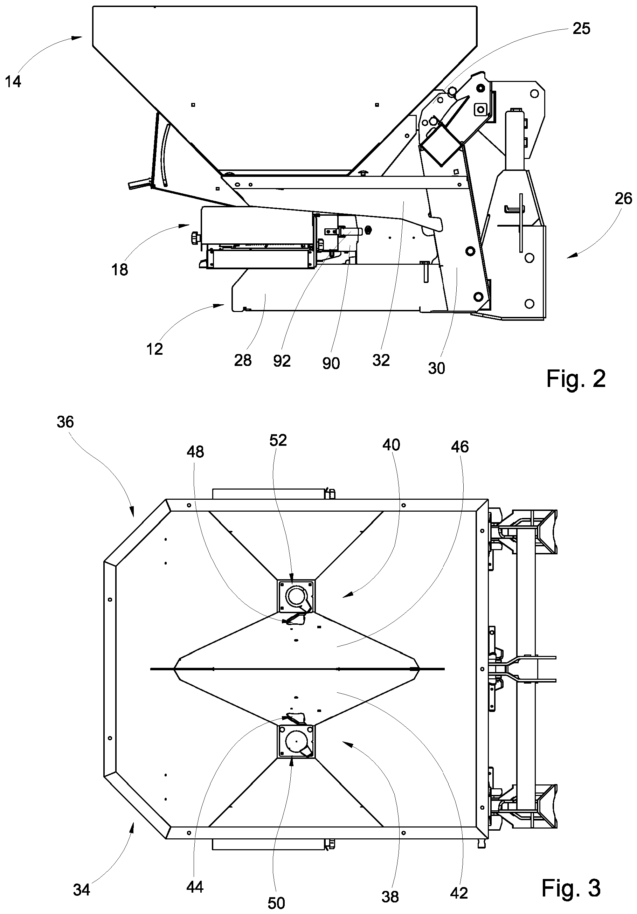

The tank 14 has a substantially quadrangular upper perimeter, the right rear corner 34 and the left rear corner 36 being beveled, as clearly visible in Figure 3.

Said conformation prevents the fertilizer spreader from bumping the vineyard rows or orchards with the side terminal ends when the tractor must turn.

The tank 14 is divided into two parts and precisely, a right containment portion 38 and a left containment portion 40, both portions having a substantially inverted pyramid shape.

A right hole 44 for dropping the product from the tank 14 towards the distribution means 16 is formed in the right inner plate 42 of the right containment portion 38.

Likewise, a left hole 46 for dropping the product from the tank 14 towards the distribution means 16 is formed in the left inner plate 46 of the left containment portion 40.

A right stirrer 50 and a left stirrer 52 are arranged on the bottom of the right containment portion 38 and on the bottom of the left containment portion 40, respectively and have a symmetric shape and a symmetric rotary movement with respect to each other.

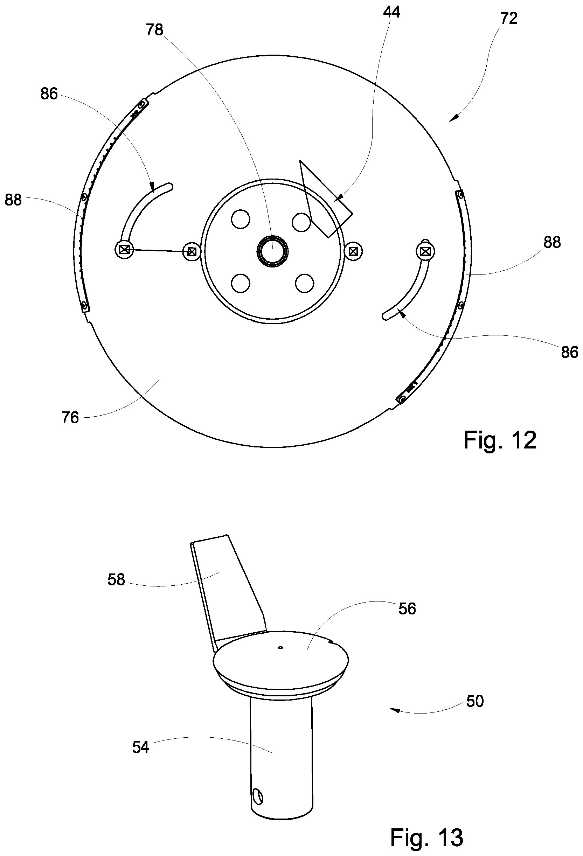

The right stirrer 50, illustrated individually in Figure 13, includes a lower pin 54 on which a disc 56 is fixed at the top, on which disc in turn a lamella 58 is fixed. More precisely, the lamella 58 is arranged almost vertically and is fixed to a portion of the perimeter edge of the disc 56. The lower pin 54 is suitably connected to moving means which are connected to a universal joint which receives motion from the tractor.

The so-configured lamella 58 passes grazing to the right hole 44 formed in the right inner plate 42 of the right containment portion 38, so that the spillage of the fertilizer from the tank 14 is facilitated.

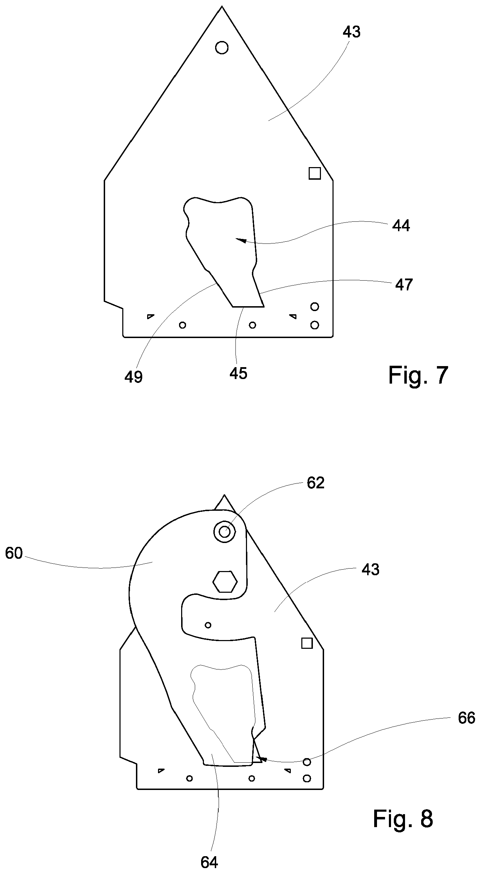

The shape of the right hole 44 for the dropping of the product, and therefore also the shape of the left hole 48, is clearly visible in Figure 7 in which a portion 43 of the right inner plate 42 of the right containment portion 38 is illustrated, in which portion said right hole 44 is formed.

The right hole 44 is shaped like an irregular parallelepiped in which the lower part has a lower horizontal side 45 and from which ends two oblique sides 47, 49 depart.

As shown in Figure 8, the right hole 44 is totally or partially closable by means of a dosing shutter 60 which can rotate because it is fixed to the portion 43 by means of a pin 62.

The dosing shutter 60 has an extreme portion 64 which is slightly tapered, that is with extreme lateral edges slightly inclined inwards.

The extreme lateral edges of the extreme portion 64 of the dosing shutter 60 can also be straight and not inclined.

Through the shape of said extreme portion 64 of the dosing shutter 60 and the irregular parallelepiped shape of the lower part of the right hole 44, when the dosing shutter 60 closes the right hole 44 almost completely, as shown in Figure 8, the non-occluded part of the right hole 44, that is the passage portion 66, has a triangular shape.

Said triangular shape of the passage portion 66 allows a precise passage of the desired quantity of product since the product is in the granule formula.

In fact, slit holes would risk preventing, almost completely, the product granules from being released when the width of said slit is lower than the diameter of said granules. Otherwise, if the width of said slit is slightly greater than the average diameter of the granules, a substantial quantity of product would be released. In essence, a slit hole of adjustable width would not allow a homogeneous adjustment of the quantity of product to be let out of the tank.

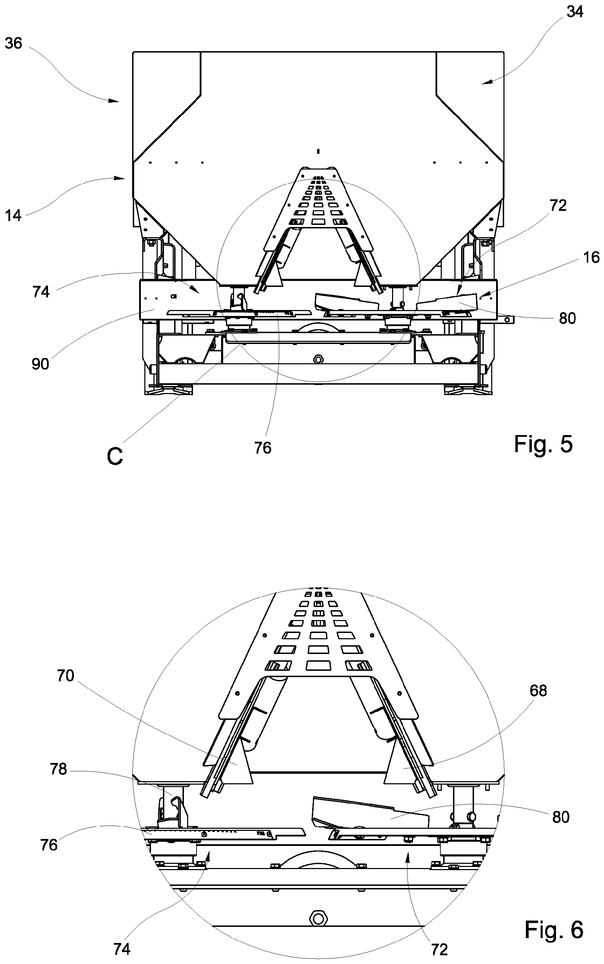

From the tank 14, and more precisely from the right containment portion 38 and the left containment portion 40, the product comes out through the right hole 44 and the left hole 48, respectively. Then, the product passes through a right duct 68 and a left duct 70, respectively, as shown in Figures 5 and 6. Then, the product falls on a right spreader plate 72 and a left spreader plate 74, respectively. These spreader plates are part of the distribution means 16.

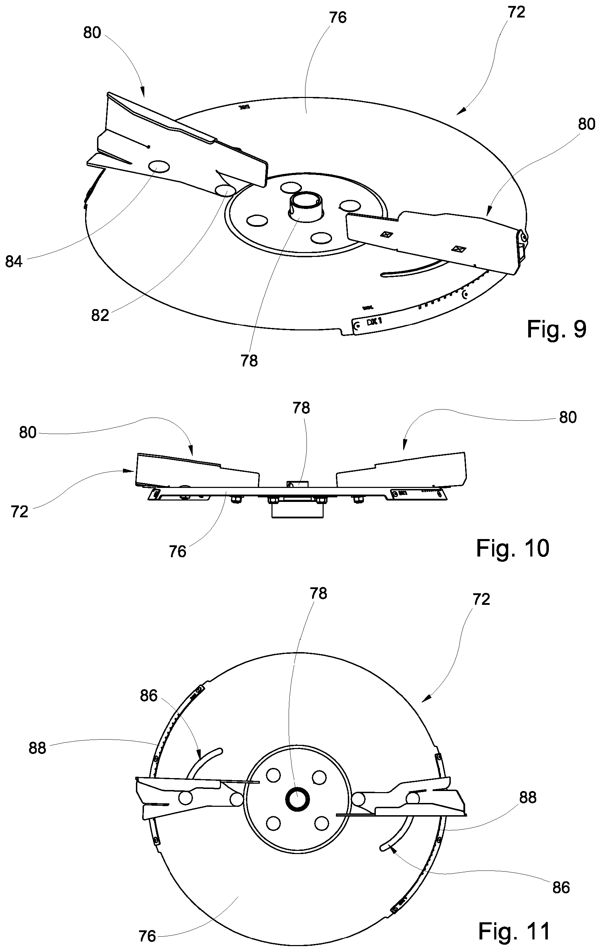

The right spreader plate 72 is symmetric to the left spreader plate 74. The two spreader plates are arranged symmetrically. The right spreader plate is shown individually in Figures 9 to 12.

In particular, the right spreader plate 72 includes a disc 76 which is rigidly fixed to a central pin 78 which is rotated by the moving means of the fertilizer spreader 10.

Besides, the lower pin 54 of the stirrer 50 is fixed to the central pin 78 by means of a coupling bushing on which it is possible to act so as to uncouple the lower pin 54 of the stirrer from the central pin 78.

When it is necessary to operate only on one row, that is when it is necessary to let the product come out only from one side of the fertilizer spreader, for example from the right containment portion 38, the left hole 48 is closed with the respective dosing shutter so as to prevent the product from coming out of the left containment portion 40.

In order to prevent the stirrer 52 of said containment portion 40 from grinding the product disposed therein and causing, at least partially, an unwanted powder, the stirrer itself is disengaged from the central pin of the corresponding left spreader plate 74.

Two spreader scoops 80 are fixed to the disc 76 and develop vertically and in a substantially radial direction.

More particularly, each spreader scoop 80 is constrained to the disc 76 in a rotatable manner by means of a fixed pin 82 and a mobile pin 84 that can move inside a slot hole 86.

Through this configuration, the two spreader scoops 80 can be arranged according to more positions by varying their angle with respect to a horizontal axis passing through the center of the disk 76.

According to the angular position of the two spreader scoops 80, the product throwing distance can vary. In order to have clear indications on how to position the spreader scoops 80 so as to get a predetermined distance, indications 88 are put for each scoop along a portion of the perimeter of the disc 76.

Consequently, the product throwing distance from the fertilizer spreader can be selected according to the inclination of the two spreader scoops 80 with respect to the central pin 78.

In case the right hole 44 is projected on the right spreader plate 72, as shown in Figure 12, it can be seen how such right hole 44 is arranged almost in correspondence with the central pin 78.

In order to distribute the product in correspondence with the vines or fruit trees, placed just next to the fertilizer spreader, it is necessary to convey the fertilizer itself by means of the conveyor 18, shown in Figures 1, 2, 4.

The conveyor 18 is arranged around the right spreader plate 72 and the left spreader plate 74, precisely around their central part and rear part.

In fact, in the front part there is a fixed wall 90 to which the conveyor 18 can be coupled by means of a right band 92 and a left band, both bands being provided with a lever closure.

The conveyor 18 includes a rear small wall 94 at the side ends of which a right discharge mouth 96 and a left discharge mouth 98 are formed which are provided with a right chute 100 and a left chute 102, respectively.

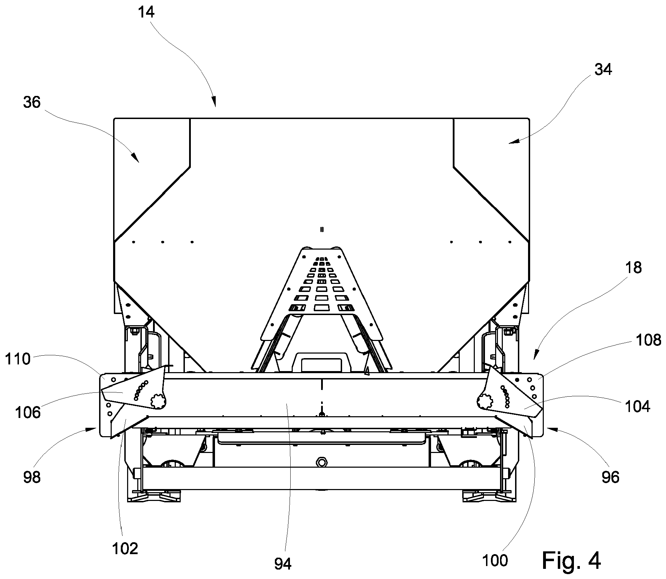

A right bulkhead 104 and a left bulkhead 106 are arranged above the right chute 100 and the left chute 102, respectively and are rotatably bound to the rear small wall so as to adjust its inclination, as shown in Figure 4.

In particular, in both the right bulkhead 104 and the left bulkhead 106 a side hole is formed into which an adjusting screw 107 can be screwed (only one is visible in Figure 1), which in turn can be screwed into one of the holes obtained in a right side edge 108 and a left side edge 110.

By varying the fixing position of the right bulkhead 104 and left bulkhead 106 with respect to the right side edge 108 and left side edge 110, it is possible to modify the height and the inclination of the bulkheads 104 and 106, so that it is possible to modify the inclination of the product exit direction from the right discharge mouth 96 and left discharge mouth 98.

When it is necessary to pass from the localized spreading to the open field spreading, it is sufficient to act on the right band 92 and the left band to easily release the conveyor 18 grabbing the conveyor by a handle and obtain a configuration of the fertilizer spreader like the one illustrated in Figures 5 and 6 .

All controls and sensors in the fertilizer spreader as well as the actuators that adjust the position of the dosing shutters 60 are connected to the control unit, so that it is possible to automatically adjust the quantity of product leaving the tank, also diversifying the quantity between the right containment portion 38 and the left containment portion 40.

In fact, the load cells fixed between the frame 12 and the connection structure 26 for the connection with the tractor allow by automatic filtering to continuously calculate the weight of the product inside the tank 14 as well as its different granulometric characteristics with the utmost precision and reliability, even during movement.

In this way, the control unit to which the load cells are connected measures the quantity of product leaving the tank 14 with an automatic adjustment of the position of the right dosing shutter 60 and left dosing shutter by means of electric actuators independent of each other.

Besides, the so-described fertilizer spreader can be equipped with the ISOBUS technology, that is a technological communication standard based on ISO 11783 standard, through which by using a single display it is possible from the tractor cabin to pilot all ISOBUS compatible instruments connected to it.

Through this feature, since the fertilizer spreader according to the invention is equipped with weighing cells and electric actuators for moving the dosing shutters, said fertilizer spreader can automatically manage, through prescription maps, the dose of product to be distributed on the ground.

Moreover, the fertilizer spreader according to the invention allows to automatically adapt the opening of the dosing shutters to the speed of advancement of the tractor (DPAE) detected by means of GPS, and to the actual flow characteristics of the products used in fertilizing. Also by changing the speed of advancement, the preselected dose remains constant. Through the automatic filtering, the weighing cells calculate the different characteristics of the fertilizer with the utmost precision and reliability, even during movement.

Furthermore, if a prescription map is inserted directly in the monitor of the tractor or in an ISOBUS parallel guide, the machine adjusts automatically the actual dose indicated by the map itself, according to a system called "variable rate system".

A technician of the sector can make changes or variants that are to be considered as included in the scope of protection of the present invention.

## Claims

1. Centrifugal fertilizer spreader (10) to distribute a product in the form of granules or pellets on a ground, and adapted to be secured to a tractor, comprising:
- a tank (14) adapted to contain the product to be distributed, and divided into a right containment portion (38) and a left containment portion (40), in which a right hole (44) and a left hole (48) are formed, respectively and have a respective adjustable opening for product output through respective closing means (60);
- distribution means (16) to distribute on the ground the product leaving the tank (14), comprising a right rotary spreader plate (72) and a left rotary spreader plate (74), placed below the right hole (44) and the left hole (48), respectively and comprising a spreader scoop (80) of substantially vertical development;
- a frame (12) to which the tank (14) and the distribution means (16) are fixed and which is adapted to be fixed to the tractor;
- at least one load cell fixed to the frame and adapted to weigh the product inside the tank (14);
**characterized by** the fact of comprising a control unit connected to a GPS device, the at least one load cell, the closing means (60) of the right hole (44) and the closing means (60) of the left hole (48), so that the opening of the right hole and the opening of the left hole are adjustable independently of each other and depending on the position of the fertilizer spreader and the weighing carried out continuously by the at least one load cell, such that the control unit is arranged to continuously interface with data coming out of the one or more load cells that weigh the quantity of product inside the tank (14), and to vary the openings of the two holes (44, 48) on the basis of the values indicated by a prescription map used, in order to allow to distribute the correct quantities of product.

2. Fertilizer spreader (10) according to the preceding claim, wherein a connection structure (26) is comprised and is adapted to be fixed to the tractor and connected to the frame (12), and wherein the at least one load cell is fixed between the connection structure (26) and the frame (12).

3. Fertilizer spreader (10) according to one of the preceding claims, wherein at least one between the right hole (44) and left hole (48) has a lower portion in the form of an irregular parallelepiped with a lower horizontal side (45) and oblique side ends (47, 49), and wherein said at least one between the right hole (44) and left hole (48) is closable by a dosing shutter (60) comprising an extreme portion (64) the side edges of which are right or inclined inwards, so that in the overlap of the dosing shutter (60) with the at least one between the right hole (44) and left hole (48), in the closing phase of said at least one between the right hole (44) and the left hole (48), the portion of the at least one between the right hole (44) and the left hole (48), which portion can remain open, has a triangular shape.

4. Fertilizer spreader (10) according to claim 2, wherein a fixed wall (90) is comprised which is arranged between the distribution means (16) and the connection structure (26) and is adapted to prevent the product to be distributed towards the front part of the fertilizer spreader (10) and the tractor; wherein a removable conveyor (18), adapted to be coupled in a removable way to the fixed wall (90) through a right band (92) and a left band, and comprising a rear small wall (94) adapted to prevent the product to be distributed towards the rear part of the fertilizer spreader (10) and at its side ends, a right discharge mouth (96) and a left discharge mouth (98) are formed.

5. Fertilizer spreader (10) according to the preceding claim, wherein a right bulkhead (104) and a left bulkhead (106) are comprised and are arranged above the right discharge mouth (96) and the left discharge mouth (98), respectively, said right bulkhead (104) and said left bulkhead (106) being rotating around a horizontal axis so as to adjust the distance of diffusion of the product from the right discharge mouth (96) and from the left discharge mouth (98).

6. Fertilizer spreader (10) according to one of the preceding claims, wherein the right hole (44) and the left hole (48) are formed in a right inner plate (42) of the right containment portion (38) and in a left inner plate (46) of he left containment portion (40), respectively, the right inner plate (42) and the left inner plate (46) being adjacent to each other and arranged substantially vertically.

7. Fertilizer spreader (10) according to one of the preceding claims, wherein a right rotary stirrer (50) and a left rotary stirrer (52) are arranged on the bottom of the right containment portion (38) and on the bottom of the left containment portion (40), respectively, the right stirrer (50) and the left stirrer (52) comprise a respective lamella (58), the lamella (58) of the right stirrer (50) passing adjacent to the right hole (44) and the lamella (58) of the left stirrer (52) passing adjacent to the left hole (48).

8. Fertilizer spreader (10) according to the preceding claim, wherein the right stirrer (50) and the left stirrer (52) comprise a right lower pin (54) and a left lower pin (54), respectively, the right lower pin (54) being fixed in a removable way to a central pin (78) of the right spreader plate (72), the left lower pin (54) being fixed in a removable way to a central pin (78) of the left rotary spreader plate (74).

9. Fertilizer spreader (10) according to one of the preceding claims, wherein the tank (14) has an upper quadrangular perimeter showing a right rear beveled corner (34) and a left rear beveled corner (36).

10. Fertilizer spreader (10) according to one of the preceding claims, wherein the spreader scoop (80) of the right rotary spreader plate (72) or left rotary spreader plate (74) has an adjustable orientation, said spreader scoop (80) being rotating around a vertical axis.

## Patentansprüche

1. Düngerstreuer (10) mit Zentrifuge zum Verteilen von Produkt in Form von Granulat oder Pellets auf einem Boden, der geeignet ist, an einem Traktor befestigt zu werden, umfassend:
- einen Behälter (14), der geeignet ist, das zu verteilende Produkt zu enthalten, und in einen rechten Speicherabschnitt (38) und einen linken Speicherabschnitt (40) unterteilt ist, in denen jeweils eine rechte Öffnung (44) und eine linke Öffnung (48) eingerichtet sind, von denen jede eine regulierbare Mündung für den Austritt des Produkts mittels entsprechender Schließelemente (60) aufweist;
- Verteilungselemente (16) zum Verteilen des Produkts im Ausgang aus dem Behälter (14) auf dem Boden, die eine rechte rotierende Streuerplatte (72) und eine linke rotierende Streuerplatte (74) umfassen, die jeweils unterhalb der rechten Öffnung (44) und der linken Öffnung (48) angeordnet sind und jeweils mindestens eine Streuerschaufel (80) mit im Wesentlichen vertikalen Verlauf umfassen;
- einen Rahmen (12), an dem der Behälter (14) und die Verteilungselemente (16) befestigt sind und der geeignet ist, am Traktor befestigt zu werden;
- mindestens eine an dem Rahmen befestigte Wägezelle, die geeignet ist, das Produkt im Inneren des Behälters (14) zu wiegen;
**dadurch gekennzeichnet, dass** er ein an ein GPS-Gerät, an die mindestens eine Wägezelle, an die Schließelemente (60) der rechten Öffnung (44) und an die Schließelemente (60) der linken Öffnung (48) angeschlossenes Steuergerät umfasst, so dass das Öffnen der rechten Öffnung und das Öffnen der linken Öffnung unabhängig voneinander und abhängig von der Position des Düngerstreuers und dem kontinuierlich von der mindestens einen Wägezelle ausgeführten Wiegevorgang regulierbar sind und so das Steuergerät darauf ausgelegt ist, kontinuierlich eine Schnittstelle mit Daten im Ausgang aus einer oder mehreren Wägezellen zu bilden, die die Produktmenge im Inneren des Behälters (14) wiegen, und die Mündungen der beiden Öffnungen (44, 48) abhängig von den von einer verwendeten Ausbringungskarte angegebenen Werte zu variieren, um es zu gestatten, die korrekten Produktmengen zu verteilen.

2. Düngerstreuer (10) nach dem vorangegangenen Anspruch, in dem eine Verbindungsstruktur (26) enthalten ist, die geeignet ist, an dem Traktor befestigt und mit dem Rahmen (12) verbunden zu werden, und in dem die mindestens eine Wägezelle zwischen der Verbindungsstruktur (26) und dem Rahmen (12) befestigt ist.

3. Düngerstreuer (10) nach einem der vorangegangenen Ansprüche, bei dem mindestens eine unter der rechten Öffnung (44) und der linken Öffnung (48) einen unteren Abschnitt in Form eines unregelmäßigen Parallelepipeds mit einer horizontalen unteren Seite (45) und schrägen seitlichen Enden (47, 49) aufweist, und bei dem die genannte mindestens eine unter der rechten Öffnung (44) und der linken Öffnung (48) über einen Dosierschieber (60) verschließbar ist, der einen Endabschnitt (64) umfasst, dessen Seitenränder gerade oder nach innen geneigt sind, so dass bei der Überlagerung des Dosierschiebers (60) mit mindestens einer unter der rechten Öffnung (44) und der linken Öffnung (48) in der Schließphase dieser mindestens einen unter der rechten Öffnung (44) und der linken Öffnung (48) der Abschnitt der mindestens einen unter der rechten Öffnung (44) und der linken Öffnung (48), der geöffnet bleiben kann, eine dreieckige Form aufweist.

4. Düngerstreuer (10) nach Anspruch 2, in dem eine feste Wand (90) enthalten ist, die zwischen den Verteilungselementen (16) und der Verbindungsstruktur (26) angeordnet und geeignet ist, die Verteilung des Produkt zu dem vorderen Teil des Düngerstreuers (10) und dem Traktor zu unterbinden; in dem eine abnehmbare Fördervorrichtung (18) enthalten ist, die geeignet ist, auf entfernbare Weise mit der festen Wand (90) mittels eines rechten Bandstreifens (92) und eines linken Bandstreifens gekuppelt zu werden und eine kleine Rückwand (94) umfasst, die geeignet ist, die Verteilung des Produkts zum vorderen Teil des Düngerstreuers (10) zu unterbinden und an deren seitlichen Enden eine rechte Auswerfmündung (96) und eine linke Auswerfmündung (98) eingerichtet sind.

5. Düngerstreuer (10) nach dem vorangegangenen Anspruch, in dem eine rechte Trennwand (104) und eine linke Trennwand (106) enthalten sind, die im Verhältnis zu der rechten Auswerfmündung (96) und zu der linken Auswerfmündung (98) oberhalb angeordnet sind, wobei die genannte rechte Trennwand (104) und die genannte linke Trennwand (106) um eine Horizontalachse drehbar sind, um den Abstand der Verteilung des Produkts aus der rechten Auswerfmündung (96) und aus der linken Auswerfmündung (98) zu regulieren.

6. Düngerstreuer (10) nach einem der vorangegangenen Ansprüche, bei dem die rechte Öffnung (44) und die linke Öffnung (48) jeweils in einer rechten inneren Platte (42) des rechten Speicherabschnitts (38) und in einer linken inneren Platte (46) des linken Speicherabschnitts (40) eingerichtet sind, wobei die rechte innere Platte (42) und die linke innere Platte (46) aneinander angrenzend und im Wesentlichen vertikal angeordnet sind.

7. Düngerstreuer (10) nach einem der vorangegangenen Ansprüche, bei dem auf dem Boden des rechten Speicherabschnitts (38) und auf dem Boden des linken Speicherabschnitts (40) jeweils ein rechtes rotierendes Rührwerk (50) und ein linkes rotierendes Rührwerk (52) angeordnet sind, wobei das rechte Rührwerk (50) und das linke Rührwerk (52) jeweils eine Lamelle (58) umfassen, wobei die Lamelle (58) des rechten Rührwerks (50) an die rechte Öffnung (44) angrenzend verläuft und die Lamelle (58) des linken Rührwerks (52) an die linke Öffnung (48) angrenzend verläuft.

8. Düngerstreuer (10) nach dem vorangegangenen Anspruch, bei dem das rechte Rührwerk (50) und das linke Rührwerk (52) jeweils einen unteren rechten Zapfen (54) und einen unteren linken Zapfen (54) umfassen, wobei der untere rechte Zapfen (54) auf entfernbare Weise an einem zentralen Zapfen (78) der rotierenden rechten Streuerplatte (72) befestigt ist, wobei der untere linke Zapfen (54) auf entfernbare Weise an einem zentralen Zapfen (78) der linken rotierenden Streuerplatte (74) befestigt ist.

9. Düngerstreuer (10) nach einem der vorangegangenen Ansprüche, bei dem der Behälter (14) einen oberen viereckigen Umfang mit einer abgeschrägten rechten hinteren Ecke (34) und einer abgeschrägten linken hinteren Ecke (36) aufweist.

10. Düngerstreuer (10) nach einem der vorangegangenen Ansprüche, bei dem die Streuerschaufel (80) der rotierenden rechten Streuerplatte (72) oder der rotierenden linken Streuerplatte (74) eine regulierbare Ausrichtung aufweist, wobei die genannte Streuerschaufel (80) um eine Vertikalachse drehbar ist.

## Revendications

1. Épandeur (10) centrifuge d'engrais pour distribuer sur un terrain du produit sous forme de granulés ou de pastilles et apte à être fixé à un tracteur, comprenant :
- une cuve (14) apte à contenir le produit devant être distribué, et divisée en une portion de confinement droite (38) et en une portion de confinement gauche (40), dans lesquelles un trou droit (44) et un trou gauche (48) sont, respectivement, obtenus ayant chacun une ouverture réglable pour la sortie du produit par l'intermédiaire de moyens de fermeture (60) respectifs ;
- des moyens de distribution (16) du produit sur le terrain sortant de la cuve (14) comprenant un plat d'épandage droit (72) rotatif et un plat d'épandage gauche (74) rotatif, disposés respectivement en-dessous du trou droit (44) et du trou gauche (48) et comprenant chacun au moins une aube d'épandage (80) de développement sensiblement vertical ;
- un châssis (12) auquel la cuve (14) et les moyens de distribution (16) sont fixés et apte à être fixé au tracteur ;
- au moins une cellule de charge fixée au châssis et apte à peser le produit à l'intérieur de la cuve (14) ;
**caractérisé en ce qu'**il comprend une unité de commande reliée à un dispositif GPS, à l'au moins une cellule de charge, aux moyens de fermeture (60) du trou droit (44) et aux moyens de fermeture (60) du trou gauche (48), de sorte que l'ouverture du trou droit et l'ouverture du trou gauche soient réglables indépendamment l'une de l'autre et en fonction de la position de l'épandeur d'engrais et du pesage effectué sans interruption par l'au moins une cellule de charge, de sorte que l'unité de commande soit prédisposée pour se connecter sans interruption avec des données sortant de l'une ou plusieurs cellules de charge qui pèsent la quantité de produit à l'intérieur de la cuve (14), et pour varier les ouvertures des deux trous (44, 48) sur la base des valeurs indiquées par une carte de prescription utilisée, afin de permettre la distribution des quantités de produits correctes.

2. Épandeur d'engrais (10) selon la revendication précédente, comprenant une structure de connexion (26) apte à être fixée au tracteur et liée au châssis (12), et dans lequel l'au moins une cellule de charge est fixée entre la structure de connexion (26) et le châssis (12).

3. Épandeur d'engrais (10) selon l'une des revendications précédentes, dans lequel l'au moins un du trou droit (44) et du trou gauche (48) a une portion inférieure en forme de parallélépipède irrégulier avec un côté inférieur (45) horizontal et des extrémités latérales obliques (47, 49), et dans lequel ledit au moins un du trou droit (44) et du trou gauche (48) peut être fermé par un obturateur de dosage (60) comprenant une portion extrême (64) dont les bords latéraux sont droits ou inclinés vers l'intérieur, de façon à ce que, lors du chevauchement de l'obturateur de dosage (60) avec l'au moins un du trou droit (44) et du trou gauche (48), au cours de l'étape de fermeture dudit au moins un du trou droit (44) et du trou gauche (48), la portion de l'au moins un du trou droit (44) et du trou gauche (48) qui peut rester ouverte soit de forme triangulaire.

4. Épandeur d'engrais (10) selon la revendication 2, comprenant une paroi fixe (90) disposée entre les moyens de distribution (16) et la structure de connexion (26) et apte à empêcher la distribution du produit vers la partie avant de l'épandeur d'engrais (10) et le tracteur ; comprenant un convoyeur (18) amovible, apte à être couplé de manière amovible à la paroi fixe (90) par l'intermédiaire d'un feuillard (92) droit et d'un feuillard gauche, et comprenant une petite paroi arrière (94) apte à empêcher la distribution du produit vers la partie arrière de l'épandeur d'engrais (10) et dans lequel un orifice de décharge droit (96) et un orifice de décharge gauche (98) sont obtenus aux extrémités latérales de celle-ci.

5. Épandeur d'engrais (10) selon la revendication précédente, comprenant une paroi de séparation droite (104) et une paroi de séparation gauche (106) disposées respectivement au dessus de l'orifice de décharge droit (96) et de l'orifice de décharge gauche (98), lesdites paroi de séparation droite (104) et paroi de séparation gauche (106) étant rotatives autour d'un axe horizontal, de manière à régler la distance de diffusion du produit à partir de l'orifice de décharge droit (96) et de l'orifice de décharge gauche (98).

6. Épandeur d'engrais (10) selon l'une des revendications précédentes, dans lequel le trou droit (44) et le trou gauche (48) sont obtenus respectivement dans une plaque interne droite (42) de la portion de confinement droite (38) et dans une plaque interne gauche (46) de la portion de confinement gauche (40), la plaque interne droite (42) et la plaque interne gauche (46) étant adjacentes l'une à l'autre et disposées sensiblement de façon verticale.

7. Épandeur d'engrais (10) selon l'une des revendications précédentes, dans lequel un agitateur droit (50) rotatif et un agitateur gauche (52) rotatif sont disposés respectivement au fond de la portion de confinement droite (38) et au fond de la portion de confinement gauche (40), l'agitateur droit (50) et l'agitateur gauche (52) comprenant chacun une lamelle (58), la lamelle (58) de l'agitateur droit (50) passant de manière adjacente par rapport au trou droit (44) et la lamelle (58) de l'agitateur gauche (52) passant de manière adjacente par rapport au trou gauche (48).

8. Épandeur d'engrais (10) selon la revendication précédente, dans lequel l'agitateur droit (50) et l'agitateur gauche (52) comprennent respectivement un goujon inférieur (54) droit et un goujon inférieur (54) gauche, le goujon inférieur (54) droit étant fixé de manière amovible à un goujon central (78) du plat d'épandage droit (72) rotatif, le goujon inférieur (54) gauche étant fixé de manière amovible à un goujon central (78) du plat d'épandage gauche (74) rotatif.

9. Épandeur d'engrais (10) selon l'une des revendications précédentes, dans lequel la cuve (14) a un périmètre supérieur quadrangulaire, avec un angle arrière droit (34) et un angle arrière gauche (36) adoucis.

10. Épandeur d'engrais (10) selon l'une des revendications précédentes, dans lequel l'aube d'épandage (80) du plat d'épandage droit (72) rotatif ou du plat d'épandage gauche (74) rotatif a une orientation réglable, ladite aube d'épandage (80) étant rotative autour d'un axe vertical.
